(19) Europäisches Patentamt
European Patent Office
Office européen des brevets

(11) **EP 4 546 869 A1**

(12) **EUROPEAN PATENT APPLICATION**
published in accordance with Art. 153(4) EPC

(43) Date of publication:
**30.04.2025 Bulletin 2025/18**

(21) Application number: **23846983.7**

(22) Date of filing: **26.07.2023**

(51) International Patent Classification (IPC):
*H04W 36/30* (2009.01)     *H04W 36/00* (2009.01)
*H04W 36/08* (2009.01)     *H04W 84/04* (2009.01)

(52) Cooperative Patent Classification (CPC):
H04W 36/00; H04W 36/08; H04W 36/30;
H04W 84/04

(86) International application number:
**PCT/KR2023/010798**

(87) International publication number:
**WO 2024/025325 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.07.2022 KR 20220092776**

(71) Applicant: Samsung Electronics Co., Ltd.
Suwon-si, Gyeonggi-do 16677 (KR)

(72) Inventors:
• **KIM, Sangbum**
  Suwon-si, Gyeonggi-do 16677 (KR)
• **JUNG, Sangyeob**
  Suwon-si, Gyeonggi-do 16677 (KR)
• **HWANG, June**
  Suwon-si, Gyeonggi-do 16677 (KR)

(74) Representative: **Gulde & Partner
Patent- und Rechtsanwaltskanzlei mbB
Berliner Freiheit 2
10785 Berlin (DE)**

(54) **METHOD AND DEVICE FOR SUPPORTING CELL RESELECTION OPERATION IN MOBILE IAB**

(57) The present disclosure relates to a 5G or 6G communication system for supporting higher data rates. The present disclosure relates to a method for performing cell reselection in mobile IAB. According to one embodiment of the present invention, a method by which a terminal operates in a wireless communication system may be disclosed. The method may comprise the steps of: receiving a system information block (SIB) from a base station; identifying whether the base station is a mobile integrated access and backhaul (IAB) node, on the basis of a mobile IAB indicator included in the SIB; and, when the base station for a serving cell of the terminal is a mobile IAB node, performing cell reselection on the basis of cell reselection parameters for the mobile IAB included in the SIB.

FIG. 5

**Description**

[Technical Field]

The disclosure relates to a wireless communication system and, more particularly, to a method and device enabling a terminal connected to a mobile IAB node to perform a cell reselection operation.

[Background Art]

Fifth generation (5G) mobile communication technology defines a wide frequency band to enable fast transmission speed and new services, and can be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multi-beam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as V2X (Vehicle-to-Everything) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things, IIoT) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access (2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its location.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design stage and internalizes end-to-end AI support functions to realize system optimization, and next-generation distributed computing that realizes services whose complexity exceeds the limit of terminal computing capabilities by utilizing ultra-high-performance communication and computing resources.

[Disclosure]

[Technical Problem]

An object of the disclosure is to suppress a terminal connected to a mobile node such as a mobile IAB node from performing unnecessary cell reselection operation.

[Technical Solution]

To achieve the above objective, an embodiment of the disclosure may disclose an operation method of a terminal in a wireless communication system. The operation method may include: receiving a system information block (SIB) from a base station; identifying, based on a mobile integrated access and backhaul (IAB) indicator included in the SIB, whether the base station is a mobile IAB node; and performing cell reselection based on mobile IAB-specific cell reselection parameters included in the SIB in case that the base station associated with a serving cell of the terminal is a mobile IAB node.

[Advantageous Effects]

According to at least one of embodiments of the disclosure, a terminal may determine whether a neighbor cell considered in cell reselection operation is a mobile IAB cell, and perform cell reselection by applying new parameters according to the determination result, so that the terminal connected to the mobile IAB cell may not perform unnecessary cell reselection operation.

[Description of Drawings]

FIG. 1 is a conceptual diagram of integrated access and backhaul (IAB) nodes according to an embodiment of the disclosure.

FIG. 2 is a diagram for describing a method for the UE to perform cell reselection according to an embodiment of the disclosure.

FIG. 3 is a diagram for explaining a process in which frequency-specific priority information for cell reselection is broadcast through SIB to or is applied to a specific UE through an RRC Release message being dedicated RRC signaling according to an embodiment of the disclosure.

FIG. 4 is a diagram for explaining changes in signal strength experienced by the UE camping on a mobile IAB node and corresponding cell reselection operation according to an embodiment of the disclosure.

FIG. 5 is a flowchart of a cell reselection operation performed by the UE camping on a mobile IAB node according to an embodiment of the disclosure.

FIG. 6 is a diagram for explaining changes in signal strength experienced by the UE close to a mobile IAB node and corresponding cell reselection operation according to an embodiment of the disclosure.

FIG. 7 is a flowchart of a cell reselection operation performed by the UE close to a mobile IAB node according to an embodiment of the disclosure.

FIG. 8 is a flowchart of a base station operation for broadcasting cell reselection parameters considered for mobile IAB according to an embodiment of the disclosure.

FIG. 9 is a sequence diagram of a UE operation for reporting mobile IAB related information according to an embodiment of the disclosure.

FIG. 10 is a flowchart of a UE operation for reporting mobile IAB related information according to an embodiment of the disclosure.

FIG. 11 is a block diagram illustrating the internal structure of a UE according to an embodiment of the disclosure.

FIG. 12 is a block diagram illustrating the structure of a base station according to an embodiment of the disclosure.

[Mode for Disclosure]

In describing the embodiments in this specification, descriptions of technical contents that are well known in the technical field to which the present disclosure belongs and are not directly related to the disclosure may be omitted. This is to convey the subject matter of the disclosure more clearly without obscuring it by omitting unnecessary explanation.
For the same reason, some components in the attached drawings may be exaggerated, omitted, or depicted in brief. Also, the size of each component does not necessarily reflect the actual size. In each drawing, identical or corresponding components are given the same reference symbols.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the description to refer to the same parts.

Meanwhile, it is known to those skilled in the art that blocks of a flowchart (or sequence diagram) and a combination of flowcharts may be represented and executed by computer program instructions. These computer program instructions may be loaded on a processor of a general purpose computer, special purpose computer, or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

In addition, a block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order.

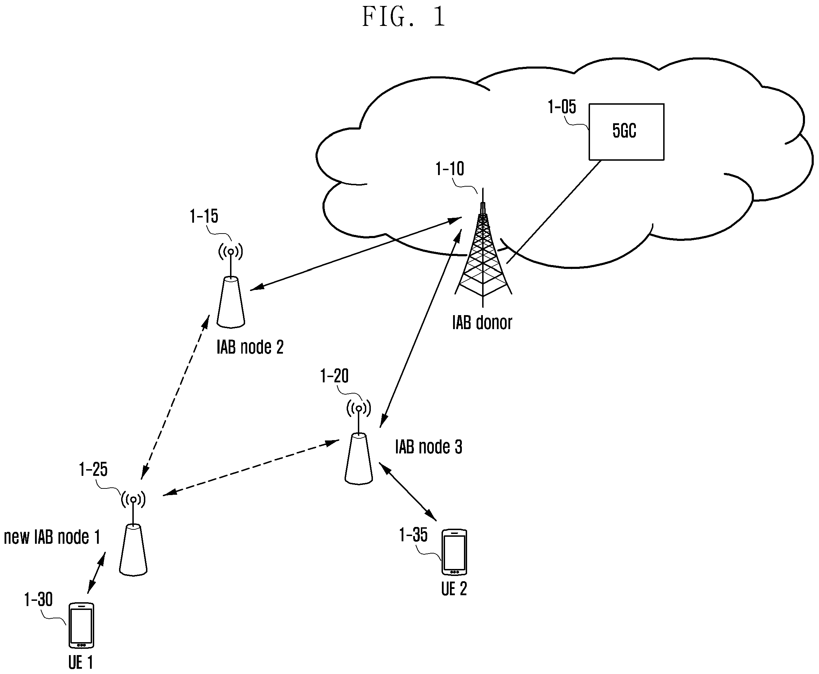

In the description, the word "unit", "module", or the like may refer to a software component or hardware component such as an FPGA or ASIC capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose large components and units. Components and units may be configured to drive a device or one or more processors in a secure multimedia card. FIG. 1 is a conceptual diagram of integrated access and backhaul (IAB) nodes according to an embodiment of the disclosure.

A related-art mobile communication network is composed of a number of base stations and core network equipments. Individual base stations and core network equipments carry control and data traffic through wired backhaul interfaces. IAB is a technology that replaces the traditional wired backhaul role with a wireless backhaul by using RAN nodes. The wireless backhaul may eliminate the cost and time required to install a wired network to build a wired backhaul. It also allows a mobile network to be built in a relatively short period of time in an area where the service is urgently needed.

IAB nodes 1-15, 1-20 and 1-25 refer to a RAN node that acts as a wireless access base station that supports UEs 1-30 and 1-35 as well as a wireless backhaul that carries data traffic. In the disclosure, an IAB node making a forwarding request for traffic is called a child IAB node, and an IAB node forwarding the requested traffic is called a parent IAB node. An IAB node may be a child node or a parent node, or both. An IAB donor 1-10 refers to a RAN node that is connected to the core network 1-05 and provides wireless backhaul functions to IAB nodes. IAB nodes are not directly connected to the core network, so one IAB node may connect to the IAB donor directly or via another IAB node and transmit and receive control or data traffic to and from the core network through the IAB donor. Each IAB node may be connected to UEs located within its service area and exchange transmission/reception data with the IAB donor.

When new IAB node 1 (1-25) is created, new IAB node 1 performs a process of identifying neighbor IAB nodes 1-15 and 1-20 or IAB donors and connecting to the most suitable node. In the disclosure, this is called an IAB setup process. The disclosure proposes a detailed process required in the IAB setup process. In particular, the disclosure defines separate system information for the IAB node, and through this, provides configuration information of the IAB node. In addition, for the IAB setup process, separate access control, separate random access resources, and separate RRC signaling are proposed.

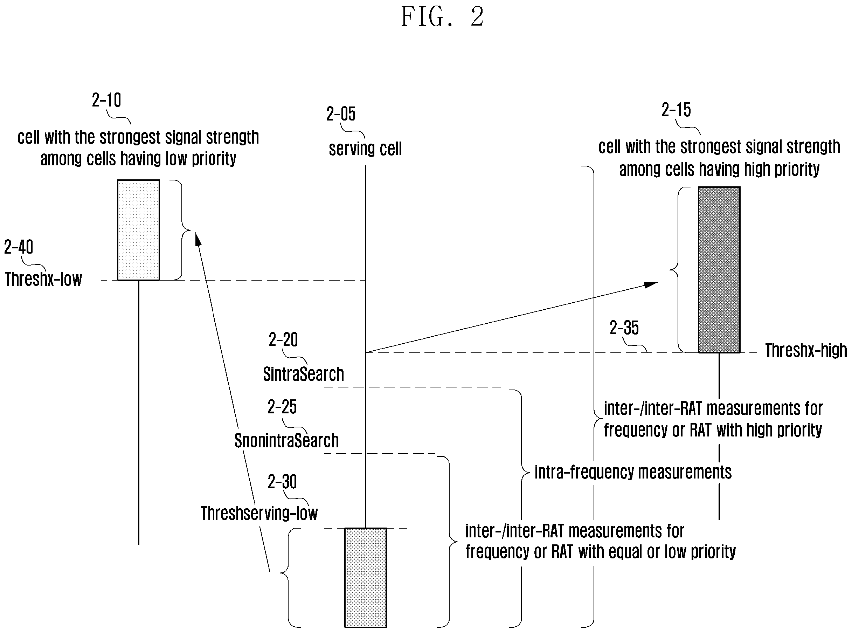

FIG. 2 is a diagram for describing a method for the UE to perform cell reselection according to an embodiment of the disclosure. The NR system assigns priorities to individual frequencies, and the UE performs cell reselection operation based on the priority information. The UE always performs inter-/inter-RAT frequency measurements for high priority frequencies or RATs, regardless of the measured signal strength for the serving cell 2-05. If the measured signal strength for the serving cell is lower than SintraSearch (2-20), the UE performs intra-frequency measurements. If the measured signal strength for the serving cell is lower than SnonintraSearch (2-25), the UE performs inter-/inter-RAT frequency measurements for frequencies with the same or lower priority than the frequency of the current serving cell. The reason for triggering the UE measurement in this stepwise manner is to reduce the power consumption of the UE due to the measurement of neighbor cells. If the channel QoS of a cell 2-15 based on a frequency with a high priority becomes higher than specific threshold ThreshX-high (2-35) for a specific time (T-ReselectionNR or T-ReselectionEUTRA), the UE reselects the cell of the frequency with a high priority as the serving cell. If the channel QoS of a cell 2-10 based on a frequency with a lower priority becomes higher than specific threshold ThreshX-low (2-40) for a specific time (T-ReselectionNR or T-ReselectionEUTRA) and the QoS of the serving cell becomes lower than ThreshServing-low (2-30), the UE reselects the cell of the frequency with a lower priority as the serving cell.

When reselecting a cell, the received signal strength (RSRP) or the received signal quality (RSRQ) may be considered. The above channel QoS means a value calculated according to S-criteria. That is, Srxlev or Squal.

Srxlev = Qrxlevmeas - (Qrxlevmin + Qrxlevminoffset) - Pcompensation - Qoffsettemp

$$Squal = Qqualmeas - (Qqualmin + Qqualminoffset) - Qoffsettemp$$

where:

| | |
|---|---|
| Srxlev | Cell selection RX level value (dB) |
| Squal | Cell selection quality value (dB) |
| $Qoffset_{temp}$ | Offset temporarily applied to a cell as specified in TS 38.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). If the UE supports SUL frequency for this cell, Qrxlevmin is obtained from *q-RxLevMinSUL,* if present, in *SIB1, SIB2* and *SIB4*, additionally, if $Q_{rxlevminoffsetcellSUL}$ is present in *SIB3* and *SIB4* for the concerned cell, this cell specific offset is added to the corresponding Qrxlevmin to achieve the required minimum RX level in the concerned cell; <br><br> else Qrxlevmin is obtained from *q-RxLevMin* in *SIB1, SIB2* and *SIB4,* additionally, if $Q_{rxlevminoffsetcell}$ is present in *SIB3* and *SIB4* for the concerned cell, this cell specific offset is added to the corresponding Qrxlevmin to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in TS 23.122 [9]. |
| $Q_{qualminoffset}$ | Offset to the signalled $Q_{qualmin}$ taken into account in the Squal evaluation as a result of a periodic search for a higher priority PLMN while camped normally in a VPLMN, as specified in TS 23.122 [9]. |
| $P_{compensation}$ | If the UE supports the additionalPmax in the NR-NS-PmaxList, if present, in *SIB1, SIB2* and *SIB4:* <br> $max(P_{EMAX1} -P_{PowerClass}, 0) - (min(P_{EMAX2}, P_{PowerClass}) - min(P_{EMAX1}, P_{PowerClass}))$ *(dB);* <br> *else:* <br> $max(P_{EMAX1} -P_{PowerClass}, 0)$ *(dB)* |
| $P_{EMAX1}, P_{EMAX2}$ | Maximum TX power level of a UE may use when transmitting on the uplink in the cell (dBm) defined as $P_{EMAX}$ in TS 38.101 [15]. If UE supports SUL frequency for this cell, $P_{EMAX1}$ and $P_{EMAX2}$ are obtained from the *p-Max* for SUL in *SIB1* and *NR-NS-PmaxList* for SUL respectively in *SIB1, SIB2* and *SIB4* as specified in TS 38.331 [3], else $P_{EMAX1}$ and $P_{EMAX2}$ are obtained from the *p-Max* and *NR-NS-PmaxList* respectively in *SIB1, SIB2* and *SIB4* for normal UL as specified in TS 38.331 [3]. |
| $P_{PowerClass}$ | Maximum RF output power of the UE (dBm) according to the UE power class as defined in TS 38.101-1 [15]. |

Particularly, in the case of inter-RAT cell reselection toward NR, Srxlev is used, and the Srxlev value is compared with specific threshold ThreshX-high or ThreshX-low. When using the received signal quality, i.e. RSRQ, the base station may provide Threshserving-lowQ, ThreshX-lowQ, ThreshX-highQ to the UE through system information or dedicated signaling; when using the received signal strength, i.e. RSRP, the base station may provide Threshserving-lowP, ThreshX-lowP, ThreshX-highP to the UE through system information or dedicated signaling. When these parameters are provided through system information, Threshserving-lowQ and Threshserving-lowP may be provided through SIB2, and for corresponding inter-/inter-RAT frequencies, ThreshX-lowQ, ThreshX-highQ, ThreshX-lowP, ThreshX-highP may be provided through SIB4 and SIB5. The specific time T-ReselectionNR may be provided to the UE through SIB2 and SIB4, and T-ReselectionEUTRA may be provided to the UE through SIB4.

In the case of intra-frequency or inter-frequency with the same frequency priority, the following cell-ranking criterion may be used to determine whether to reselect a cell. Rs stated below is a cell-ranking value for the serving cell, and Rn stated below is a cell-ranking value for the neighbor cell.

$$R_s = Q_{meas,s} + Q_{hyst} - Qoffset_{temp}$$

$$R_n = Q_{meas,n} - Qoffset - Qoffset_{temp}$$

The above offset information may be provided to the UE through SIB3.

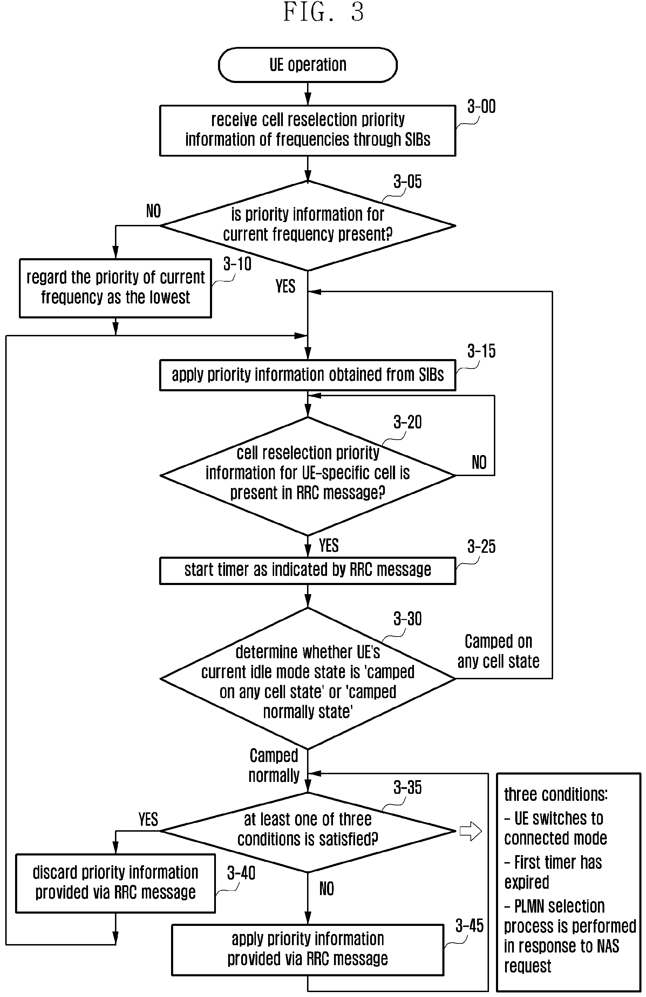

FIG. 3 is a diagram for explaining a process in which frequency-specific priority information for cell reselection is broadcast through SIB to or is applied to a specific UE through an RRC Release message being dedicated RRC signaling according to an embodiment of the disclosure. Cell reselection is the process of reselecting a serving cell so that a UE on the move can be connected to a cell with the best channel state. The network controls cell reselection of a UE in idle mode by assigning priorities to frequencies. For example, if a UE receives priority information for two frequencies f1 and f2, and f1 has a higher priority than f2, the probability that the UE will remain at f1 increases. Also, although the UE remains at f2, if the channel state of f2 is not good, it will try to change to f1. Priority information of frequencies may be broadcast via SIB, or may be provided to a specific UE via RRC Release message, which is dedicated RRC signaling. Although the UE already has priority information of frequencies through SIB, if UE-specific priority information is provided through RRC signaling, the priority information of SIB may be ignored. The priority information of each frequency is transmitted through a cellReselectionPriority IE below, and is assigned one of the priorities of a total of X+1 levels. A lower value means a lower priority. That is, '0' means the lowest priority.

**CellReselectionPriority information element**

```
-- ASN1START
-- TAG-CELLRESELECTIONPRIORITY-START

CellReselectionPriority ::=              INTEGER (0..7)

-- TAG-CELLRESELECTIONPRIORITY-STOP
-- ASN1STOP
```

The inter-RAT frequencies cannot be given the same priority. If the idle state of the UE is 'camped on any cell state', the UE may apply the frequency priority information received through SIB and may only store the priority information received through RRC signaling without using it. The cellReselectionPriority IE is an optional IE and may be not present. In this case, priority information for the corresponding frequency is not provided. At this time, the UE may consider the priority of the corresponding frequency as the lowest level. At step 3-00, the UE receives, through SIB, priority information about frequencies used by other RATs as well as EUTRA. However, priority information may be not necessarily provided for all frequencies. Priority information for the frequency of the currently camped serving cell may be not provided either. The UE may check this at step 3-05. If priority information for the frequency of the current serving cell is not provided, the priority of the corresponding frequency may be considered as the lowest level. The UE may apply the priority information of each frequency at step 3-15. When the UE receives an RRC Release message from the base station, it switches from the connected mode to the idle mode. This RRC message may include frequency priority information. This is UE-specific information, and is generally applied with precedence over frequency priority information provided via SIB. Hence, the UE checks whether frequency priority information is present in the RRC message at step 3-20. If there is frequency priority information in the RRC message, the UE applies the first timer value included therein to start the first timer at step 3-25. The UE determines whether the current idle mode state is 'camped on any cell state' or 'camped normally state' at step 3-30. Here, 'camped normally state' refers to the state in which the UE is camped on a suitable cell. A suitable cell is a cell that can provide a normal service to the UE and satisfies the detailed conditions listed below.

- Cell corresponding to a PLMN in the selected PLMN, registered PLMN, or equivalent PLMN list.
- Cell being unbarred
- Cell satisfying the cell selection criterion

'Camped on any cell state' refers to the state where the UE is unable to camp on a suitable cell and is camping on an acceptable cell. In an acceptable cell, a normal service is not possible, and only emergency calls may be attempted by the UE. An acceptable cell is a cell that satisfies the following conditions.

- Cell being unbarred
- Cell satisfying the cell selection criterion

If the UE is in 'camped on any cell state' of the idle state, it returns to step 3-15 and applies the frequency priority information provided via SIB instead of the priority information provided by the RRC Release message. If the UE is in 'camped normally' idle state, the UE determines whether at least one of the three conditions below is satisfied at step 3-35. The three conditions may include the following conditions.

- UE switches to the connected mode
- First timer has expired
- PLMN selection process is performed in response to NAS request

If any of the above conditions is satisfied, the UE discards the priority information provided via the RRC Release message at step 3-40, and returns to step 3-15 to apply the frequency priority information provided via SIB. Otherwise, if none of the conditions are satisfied, the UE applies the priority information provided via the RRC Release message at step 3-45.

The frequency priority information may affect the UE's measurement operation on a specific frequency. The UE may always perform measurements on a frequency that has a higher priority than the current serving cell. In contrast, to save UE power, the UE may not always perform measurements on the same frequency as the serving cell (intra-frequency) or on other frequencies with an equal or lower priority. Measurements on such cells may be performed when the channel QoS of the serving cell is less than or equal to a specific threshold. Cell reselection is performed to move to a cell with a good channel state, so there is no reason to move to a frequency with an equal or lower priority when the channel QoS of the current serving cell is good. Hence, to reduce power consumption due to unnecessary channel measurements, whether to perform measurements may be determined based on a specific threshold value. In the case of the same frequency (intra-frequency), channel measurements may be performed on other cells of the same frequency, if the QoS of the serving cell is equal to or lower than specific threshold Sintrasearch. For other frequencies with an equal or lower priority, if the QoS of the serving cell is equal to or lower than specific threshold Snonintrasearch, channel measurements are performed on the cells of those other frequencies. In general, RSRP and RSRQ may be considered for channel QoS.

While performing measurement in this way, if the channel QoS of the cell of a frequency with a higher priority becomes higher than specific threshold ThreshX-high, the UE may reselect the cell of the frequency with a higher priority as the serving cell. If the channel QoS of the cell of a frequency with a lower priority becomes higher than specific threshold ThreshX-low and the QoS of the serving cell becomes lower than ThreshServing-low, the UE may reselect the cell of the frequency with a lower priority as the serving cell.

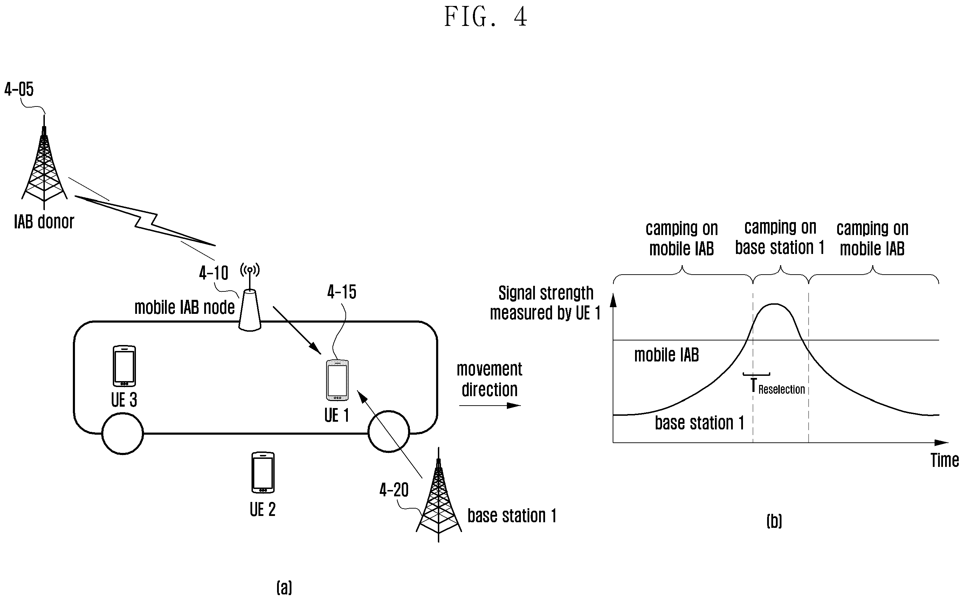

FIG. 4 is a diagram for explaining changes in signal strength experienced by the UE camping on a mobile IAB node and corresponding cell reselection operation according to an embodiment of the disclosure.

For the next generation mobile communication system, research on a moving IAB node is in progress. In this embodiment, this is called a mobile IAB node. Like an existing IAB node, the mobile IAB node is wirelessly connected to an IAB donor or neighbor IAB node, and may provide data transmission and reception services to UEs located within its service area as a base station. What makes this mobile IAB node different from an existing IAB node is that it may move by being installed on a bus, train, subway, or the like that is on the move.

A mobile IAB node 4-10 installed on a transportation means (e.g., bus, train) is connected to an IAB donor 4-05 (or, neighbor IAB node). At this time, the UE 4-15 of a user on the transportation means is camping on the mobile IAB node providing the best signal strength. The transportation means may move close to a base station 4-20. As shown in part (b) of FIG. 4, if the neighbor base station provides a better signal strength than the mobile IAB node for a preset time period (T-Reselection), the UE may reselect the neighbor base station as a cell to camp on. However, the transportation means will move soon away from the neighbor base station, and the UE may have to perform cell reselection again toward the mobile IAB node. If the mobile IAB node provides sufficiently good signal strength to the UE, the above cell reselection operations may be unnecessary for the UE. In this embodiment, methods are proposed to suppress the UE from performing such an unnecessary cell reselection operation.

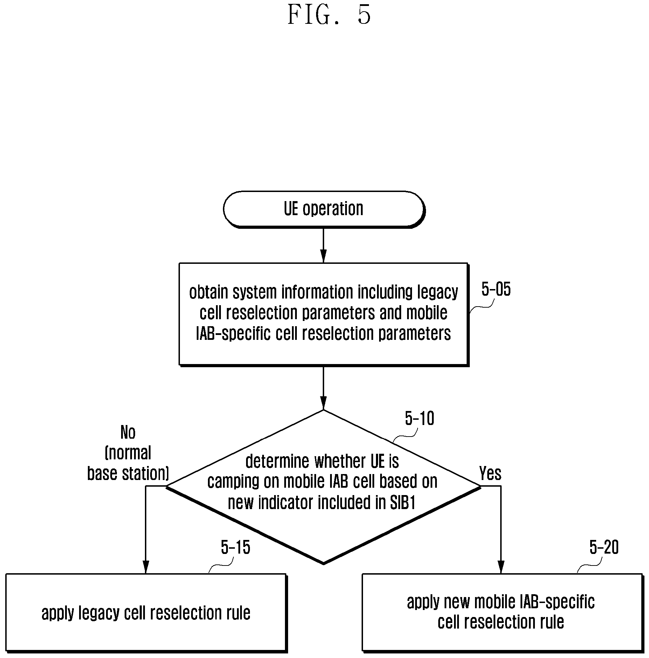

FIG. 5 is a flowchart of a cell reselection operation performed by the UE camping on a mobile IAB node according to an embodiment of the disclosure.

At step 5-05, the UE may receive, contained in the system information broadcast by the base station, legacy cell reselection parameters, and new first indicator information and mobile IAB-specific cell reselection parameters proposed in this embodiment. This embodiment is characterized in that the mobile IAB node or its neighbor base station broadcasts the following new information through system information. Certain information among the following information may be provided to the UE via dedicated signaling such as an RRC Release message.

- First indicator: indicates that the cell broadcasting SIB1 including this indicator is a mobile IAB cell. A UE that receives SIB1 including this indicator may recognize that it is camping on a mobile IAB node. If the UE having received this indicator also supports mobile IAB, it may perform the cell reselection operation proposed in this embodiment.
- Mobile IAB-specific T-Reselection: if the serving cell is a mobile IAB cell, or if at least one of the neighbor cells considered in the cell reselection rule is a mobile IAB cell, mobile IAB-specific T-Reselection may be applied. This mobile IAB-specific T-Reselection is set to a larger value compared with legacy T-Reselection. To set mobile IAB-specific T-Reselection to a larger value, the base station may provide a scaling factor relative to the existing T-Reselection setting value or provide a new mobile IAB-specific T-Reselection parameter separate from the existing setting value. If a scaling factor is configured, mobile-specific T-Reselection may be derived by multiplying the existing T-Reselection value by this scaling factor. This mobile IAB-specific T-Reselection may be set on a frequency basis and may be provided to the UE through SIB2 and SIB4. Mobile IAB-specific T-Reselection is applied to mobile IAB cells belonging to the corresponding frequency.
- Mobile IAB-specific cell reselection parameters: separate mobile IAB-specific ThreshServing,LowQ/ThreshServing,LowP applied to the serving mobile IAB cell, and separate mobile IAB-specific ThreshX,HighQ/ThreshX,HighP, ThreshX,LowQ/ThreshX,LowP applied to the neighbor mobile IAB cell may be provided to the UE.
- Mobile IAB-specific cell-ranking offset information: when the UE is camping on a mobile IAB cell, a new first offset value to be added to the cell-ranking value of the serving mobile IAB cell and a new second offset value to be subtracted from the cell-ranking value of a cell belonging to an intra-frequency or frequency having the same priority may be provided. If the cell belonging to the intra-frequency or frequency with the same priority is also a mobile IAB cell, the first offset and second offset values are not applied.
- Mobile IAB-specific cell reselection priorities: separate cell reselection priority information that may be applied by a UE supporting mobile IAB may be provided. The UE supporting mobile IAB may perform a cell reselection operation by applying the mobile IAB-specific cell reselection priority information instead of the legacy cell reselection priority information.
- Neighbor mobile IAB cell information: information about a list of mobile IAB cells in each intra-/inter-/inter-RAT frequency. Each cell may be indicated by a PCI (physical cell ID).

At step 5-10, the UE may determine whether it is camping on a mobile IAB cell based on the new first indicator stored in the system information.

If the UE is camping on a normal base station, at step 5-15, it may perform cell reselection by applying the legacy cell reselection parameters. The legacy cell reselection operation has been described above.

If the UE supports mobile IAB and is camping on a mobile IAB cell, at step 5-20, it may perform the cell reselection operation proposed in this embodiment by applying new cell reselection parameters. The above proposed cell reselection operation is at least one of the following options, and two or more options may be applied together.

- Option 1: the serving frequency corresponding to the mobile IAB cell on which the UE supporting mobile IAB is camping is considered as the frequency with the highest priority. Since the frequency corresponding to the mobile IAB cell is the highest priority frequency, the possibility of cell reselection to a neighbor's frequency with a relatively lower priority is reduced.
- Option 2: if the UE supports mobile IAB and the UE is camping on a mobile IAB node, the cell reselection operation is performed by applying the signal strength information measured during mobile IAB-specific T-Reselection being longer than existing T-Reselection. If the mobile IAB node moves away from the neighbor base station quickly, the UE will not reselect the cell of the neighbor base station due to the lengthened T-Reselection.
- Option 3: if the UE supports mobile IAB and the UE is camping on a mobile IAB cell, the cell reselection operation is performed by applying mobile IAB-specific cell reselection parameters instead of the existing cell reselection parameters. The cell reselection parameters mean ThreshX,HighQ/ThreshX,HighP, ThreshServing,LowQ/Thresh-Serving,LowP, and ThreshX,LowQ/ThreshX,LowP.

- Option 4: if the UE supports mobile IAB and the UE is camping on a mobile IAB cell, a preset new first offset value is added to the cell-ranking value of the serving mobile IAB cell, or a preset new second offset value is subtracted from the cell-ranking values of cells belonging to the intra-frequency or frequency with the same priority. This may increase the probability of continuously camping on the current serving mobile IAB cell. Alternatively, instead of introducing the new offset, the corresponding offset value may be reflected in the existing Qoffset and $Qoffset_{temp}$ values of the cell-ranking criterion.
- Option 5: the base station may provide separate cell reselection priority information to UEs supporting mobile IAB through system information. If the base station provides the cell reselection priority information through system information and the UE itself supports mobile IAB, the cell reselection priority information is applied to the mobile IAB cell(s) belonging to a specific frequency. This separate cell reselection priority information may be utilized when determining cell reselection toward multiple cells when one or more mobile IAB nodes on the same transportation means provide multiple cells over multiple frequencies.

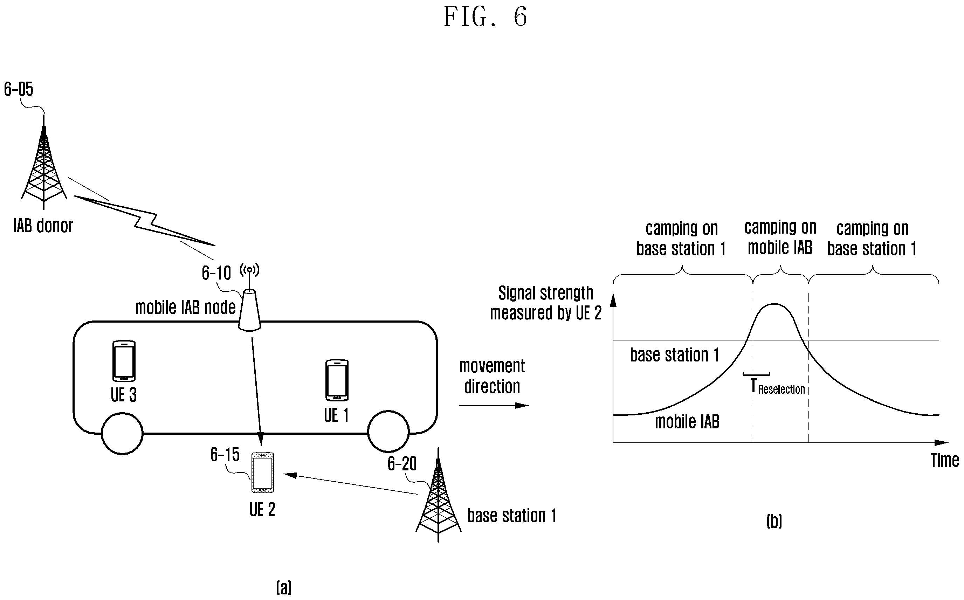

FIG. 6 is a diagram for explaining changes in signal strength experienced by the UE close to a mobile IAB node and corresponding cell reselection operation according to an embodiment of the disclosure.

A mobile IAB node 6-10 installed on a transportation means (e.g., bus, train) is connected to an IAB donor 6-05 (or, neighbor IAB node). The transportation means may closely pass by a UE 6-15 that is camping on a base station 6-20 positioned at a fixed location. As shown in part (b) of FIG. 6, if the mobile IAB node provides a better signal strength than the base station 6-20 for a preset time period (T-Reselection), the UE may reselect the mobile IAB node as a cell to camp on. However, the transportation means will move soon away from the base station, and the UE may have to perform cell reselection again toward the base station. If the base station provides sufficiently good signal strength to the UE, the above cell reselection operations may be unnecessary for the UE. In this embodiment, methods are proposed to suppress the UE from performing such an unnecessary cell reselection operation.

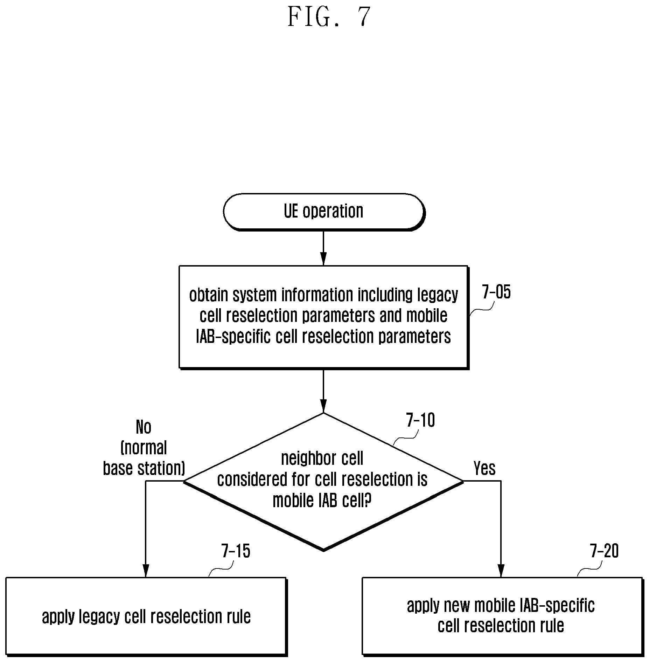

FIG. 7 is a flowchart of a cell reselection operation performed by the UE close to a mobile IAB node according to an embodiment of the disclosure.

At step 7-05, the UE is camping on a normal base station. The UE may receive, contained in the system information broadcast by the base station, legacy cell reselection parameters, and new mobile IAB-specific cell reselection parameters proposed in this embodiment. This embodiment is characterized in that the mobile IAB node or its neighbor base station broadcasts the following new information through system information. Certain information among the following information may be provided to the UE via dedicated signaling such as an RRC Release message.

- Mobile IAB-specific T-Reselection: if the serving cell is a mobile IAB cell, or if at least one of the neighbor cells considered in the cell reselection rule is a mobile IAB cell, mobile IAB-specific T-Reselection may be applied. This mobile IAB-specific T-Reselection is set to a larger value compared with legacy T-Reselection. To set mobile IAB-specific T-Reselection to a larger value, the base station may provide a scaling factor relative to the existing T-Reselection setting value or provide a new mobile IAB-specific T-Reselection parameter separate from the existing setting value. If a scaling factor is configured, mobile-specific T-Reselection may be derived by multiplying the existing T-Reselection value by this scaling factor. This mobile IAB-specific T-Reselection may be set on a frequency basis and may be provided to the UE through SIB2 and SIB4. Mobile IAB-specific T-Reselection is applied to mobile IAB cells belonging to the corresponding frequency.
- Mobile IAB-specific cell reselection parameters: separate mobile IAB-specific ThreshServing,LowQ/ThreshServing,LowP applied to the serving mobile IAB cell, and separate mobile IAB-specific ThreshX,HighQ/ThreshX,HighP, ThreshX,LowQ/ThreshX,LowP applied to the neighbor mobile IAB cell may be provided to the UE.
- Mobile IAB-specific cell-ranking offset information: if the UE is camping on a normal cell and a neighbor cell belonging to the intra-frequency or a frequency with the same priority is a mobile IAB cell, a new third offset value to be added to the cell-ranking value of the serving cell and a new fourth offset value to be subtracted from the cell-ranking value of the neighbor mobile IAB cell may be provided.
- Mobile IAB-specific cell reselection priorities: separate cell reselection priority information that may be applied by a UE supporting mobile IAB may be provided. The UE supporting mobile IAB may perform a cell reselection operation by applying the mobile IAB-specific cell reselection priority information instead of the legacy cell reselection priority information.
- Neighbor mobile IAB cell information: information about a list of mobile IAB cells in each intra-/inter-/inter-RAT frequency. Each cell may be indicated by a PCI (physical cell ID).

At step 7-10, the UE may determine whether the neighbor cell considered for cell reselection is a mobile IAB cell based on the new neighbor mobile IAB cell information included in the system information.

If the UE is camping on a normal cell and the neighbor cell considered for cell reselection is not a mobile IAB cell, at step 7-15, it may perform the cell reselection operation by applying the legacy cell reselection parameters. The legacy cell reselection operation has been described above.

If the UE is camping on a normal cell, the UE supports mobile IAB, and the neighbor cell considered for cell reselection is a mobile IAB cell, at step 7-20, it may perform the cell reselection operation proposed in this embodiment by applying new cell reselection parameters. The above proposed cell reselection operation is at least one of the following options, and two or more options may be applied together.

- Option 1: the UE supporting mobile IAB regards the serving frequency corresponding to the neighbor mobile IAB cell considered for cell reselection as the frequency with the lowest priority. Since the frequency corresponding to a mobile IAB cell is the lowest priority frequency, the possibility of reselection toward the mobile IAB cell with a frequency having a relatively low priority is reduced.
- Option 2: if the UE supports mobile IAB and the neighbor cell considered by the UE for cell reselection is a mobile IAB cell, the cell reselection operation is performed by applying the signal strength information measured during mobile IAB-specific T-Reselection being longer than existing T-Reselection. If the mobile IAB cell moves away from the UE quickly, the UE will not reselect the mobile IAB cell due to the lengthened T-Reselection.
- Option 3: if the UE supports mobile IAB and the neighbor cell considered by the UE for cell reselection is a mobile IAB cell, the cell reselection operation is performed by applying mobile IAB-specific cell reselection parameters instead of the existing cell reselection parameters. The cell reselection parameters mean ThreshX,HighQ/ThreshX,HighP, ThreshServing,LowQ/ThreshServing,LowP, and ThreshX,LowQ/ThreshX,LowP.
- Option 4: if the UE supports mobile IAB and the neighbor cell considered by the UE for cell reselection is a mobile IAB cell, a preset new third offset value is added to the cell-ranking value of the serving cell, or a preset new fourth offset value is subtracted from the cell-ranking values of mobile IAB cells belonging to the intra-frequency or frequency with the same priority. This may increase the probability of continuously camping on the current serving cell. Alternatively, instead of introducing the new offset, the corresponding offset value may be reflected in the existing Qoffset and Qoffset$_{temp}$ values of the cell-ranking criterion.

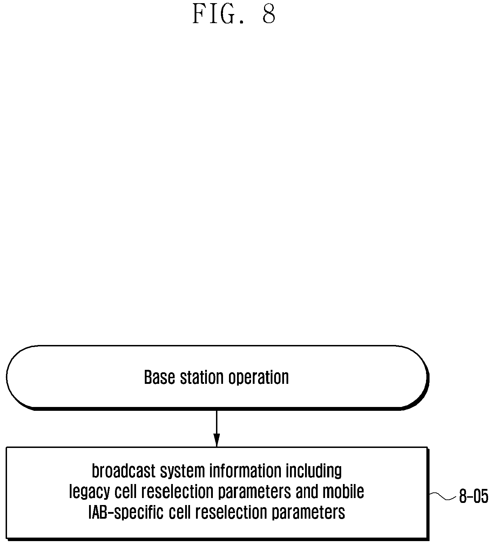

FIG. 8 is a flowchart of a base station operation for broadcasting cell reselection parameters considered for mobile IAB according to an embodiment of the disclosure.

At step 8-05, to support mobile IAB, mobile IAB cells or neighbor base stations may provide mobile IAB related information to a UE through system information. As described above, the mobile IAB cell may provide the following information to the UE through system information.

- First indicator: indicates that the cell broadcasting SIB1 including this indicator is a mobile IAB cell. A UE that receives SIB 1 including this indicator may recognize that it is camping on a mobile IAB node. If the UE having received this indicator also supports mobile IAB, it may perform the cell reselection operation proposed in this embodiment.
- Mobile IAB-specific T-Reselection
- Mobile IAB-specific cell reselection parameters: separate mobile IAB-specific ThreshServing,LowQ/ThreshServing,LowP applied to the serving mobile IAB cell, and separate mobile IAB-specific ThreshX,HighQ/ThreshX,HighP, ThreshX,LowQ/ThreshX,LowP applied to the neighbor mobile IAB cell
- Mobile IAB-specific cell-ranking offset information: setting values for the new first, second, third, and fourth offset described above
- Mobile IAB-specific cell reselection priorities: separate cell reselection priority information that may be applied by a UE supporting mobile IAB may be provided. The UE supporting mobile IAB may perform a cell reselection operation by applying the mobile IAB-specific cell reselection priority information instead of the legacy cell reselection priority information.
- Neighbor mobile IAB cell information: information about a list of mobile IAB cells in each intra-/inter-/inter-RAT frequency. Each cell may be indicated by a PCI (physical cell ID).

A cell other than a mobile IAB cell may also provide mobile IAB related information to the UE through system information. For example, all of the above information except the first indicator may correspond to this.

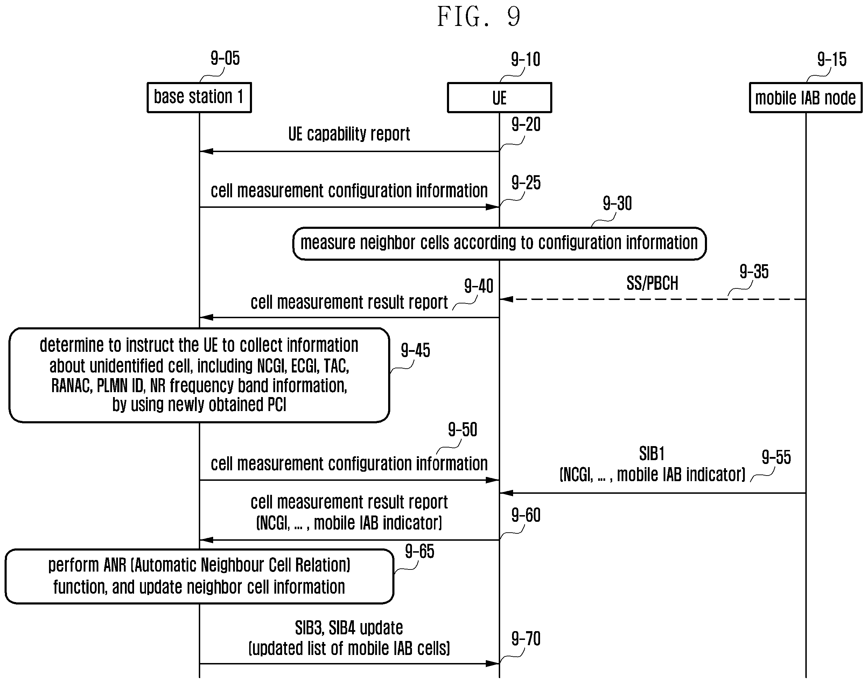

FIG. 9 is a sequence diagram of a UE operation for reporting mobile IAB related information according to an embodiment of the disclosure.

The base station should be aware of information about neighbor cells in order to support mobility for the UE. To this end, information about neighbor cells may be requested from the UE, and this operation is called automatic neighbor cell relation (ANR). This embodiment proposes an ANR operation in which the UE determines whether the neighbor cell is a mobile IAB cell and reports this to the serving cell.

The UE 9-10 may report its capability information to the serving cell 9-05 (9-20). This capability information may include an indicator indicating whether the UE supports the ANR operation in which whether the neighbor cell is a mobile IAB cell is identified and reported to the serving cell.

The serving cell may provide cell measurement configuration information to the UE (9-25). The UE having received the cell measurement configuration information may perform cell measurement operation according to the configuration information (9-30). For example, the UE may receive SS/PBCH from specific cells of the frequency indicated by the configuration information to obtain PCI information of each cell from the received SS/PBCH (9-35). The UE may use a MeasurementReport message to report the collected cell measurement results (e.g., RSRP and RSRQ) and obtained PCI information to the serving cell according to a preset event or periodicity (9-40). The serving cell may determine whether there is an identified cell based on the PCI information of the neighbor cells reported by the UE. If there is an unidentified cell 9-15, the serving cell may determine to instruct the UE to perform an ANR operation to collect specific information about the unidentified cell, for example, NCGI(s)/ECGI(s), TAC(s), RANAC(s), PLMN ID(s), NR frequency band(s), or the like (9-45). The serving cell may provide cell measurement configuration information to the above cell (9-50). Here, this configuration information may include an IE, ReportCGI, which instructs the UE to receive system information from the neighbor cell 9-15 and report the specified information included in the system information. This IE may include PCI information of the neighbor cell. In addition, the above IE may include an indicator that instructs reporting of whether the neighbor cell is a mobile IAB cell. The UE having received the configuration information may receive system information SIB 1 from the cell indicated by the PCI and collect the specified information (9-55). At this time, if the UE supports a mobile IAB cell and an indicator (i.e., first indicator) indicating that the neighbor cell is a mobile IAB cell is included in SIB1, this indicator information is also collected. The UE may report indicator information indicating whether it is a mobile IAB cell together with the specified information to the serving cell by using a MeasurementReport message (9-60). The serving cell may update its ANR information based on the specified information received from the UE (9-65). In addition, if necessary, the serving cell may update the system information to be provided (9-70). For example, SIB3, SIB4 or SIB5 includes a PCI list of mobile IAB cells belonging to each intra-/inter-/inter-RAT frequency, and the newly identified mobile IAB cell may be included in this list.

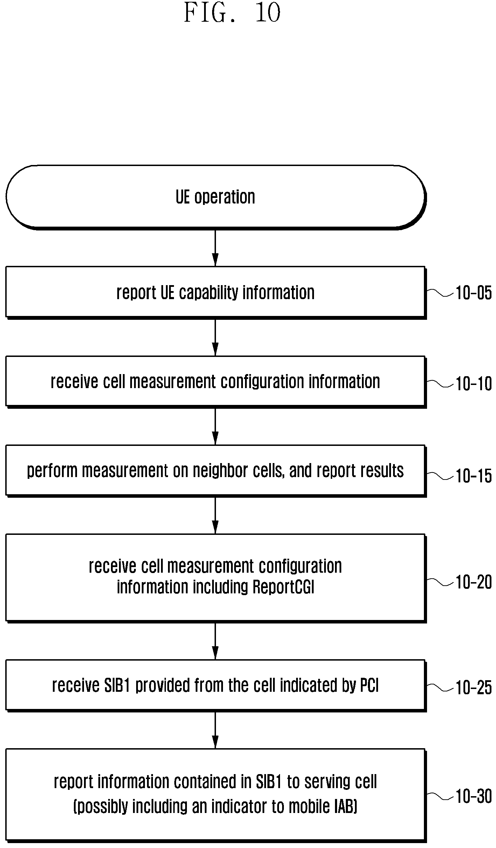

FIG. 10 is a flowchart of a UE operation for reporting mobile IAB related information according to an embodiment of the disclosure.

At step 10-05, the UE may report its capability information to the serving cell. This capability information may include an indicator indicating whether the UE supports the ANR operation in which whether the neighbor cell is a mobile IAB cell is identified and reported to the serving cell.

At step 10-10, the UE may receive cell measurement configuration information from the serving cell.

At step 10-15, the UE may report the collected cell measurement results (e.g., RSRP and RSRQ) and obtained PCI information to the serving cell according to a preset event or periodicity by using a MeasurementReport message.

At step 10-20, the UE may receive cell measurement configuration information including a ReportCGI IE having PCI information indicating a specific cell from the serving cell.

At step 10-25, the UE may receive SIB1 provided from the cell indicated by the PCI and collect specified information. Here, this SIB1 may also include indicator information indicating that the corresponding cell is a mobile IAB cell.

At step 10-30, the UE may report the collected information to the serving cell. Here, the collected information may also include indicator information indicating that the corresponding cell is a mobile IAB cell.

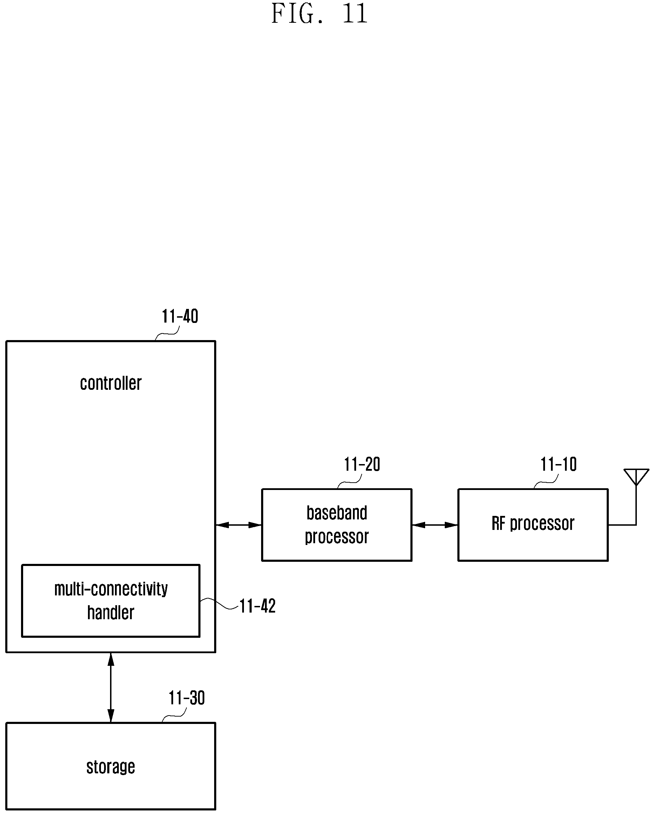

FIG. 11 is a block diagram illustrating the internal structure of a UE according to an embodiment of the disclosure.

With reference to the drawing, the UE may include a radio frequency (RF) processor 11-10, a baseband processor 11-20, a storage 11-30, and a controller 11-40.

The RF processor 11-10 performs a function for transmitting and receiving a signal through a radio channel, such as signal band conversion and amplification. That is, the RF processor 11-10 performs up-conversion of a baseband signal provided from the baseband processor 11-20 into an RF-band signal and transmit it through an antenna, and performs down-conversion of an RF-band signal received through an antenna into a baseband signal. For example, the RF processor 11-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 11-10 may include a plurality of RF chains. Further, the RF processor 11-10 may perform beamforming. For beamforming, the RF processor 11-10 may adjust phases and magnitudes of individual signals transmitted and received through the plural antennas or antenna elements. Further, the RF processor may perform MIMO (multi input multi output), and may receive several layers during an MIMO operation.

The baseband processor 11-20 performs conversion between a baseband signal and a bit stream in accordance with the physical layer specification of the system. For example, during data transmission, the baseband processor 11-20 generates complex symbols by encoding and modulating a transmission bit stream. Further, during data reception, the baseband processor 11-20 restores a reception bit stream by demodulating and decoding a baseband signal provided from the RF processor 11-10. For example, in the case of utilizing orthogonal frequency division multiplexing (OFDM), for data transmission, the baseband processor 11-20 generates complex symbols by encoding and modulating a transmission bit stream, maps the complex symbols to subcarriers, and composes OFDM symbols through inverse fast Fourier transform (IFFT) operation and cyclic prefix (CP) insertion. Further, for data reception, the baseband processor 11-20 divides a baseband signal provided from the RF processor 11-10 in units of OFDM symbols, restores the signals mapped to subcarriers through fast Fourier transform (FFT) operation, and restores the reception bit stream through demodulation and decoding.

The baseband processor 11-20 and the RF processor 11-10 transmit and receive signals as described above. The baseband processor 11-20 and the RF processor 11-10 may be called a transmitter, a receiver, a transceiver, or a communication unit. Further, to support different radio access technologies, at least one of the baseband processor 11-20 or the RF processor 11-10 may include a plurality of communication modules. In addition, to process signals of different frequency bands, at least one of the baseband processor 11-20 or the RF processor 11-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 11-30 stores data such as basic programs, application programs, and configuration information for the operation of the UE. In particular, the storage 11-30 may store information about a second access node that performs wireless communication using a second radio access technology. The storage 11-30 provides stored data in response to a request from the controller 11-40.

The controller 11-40 controls the overall operation of the UE. For example, the controller 11-40 transmits and receives signals through the baseband processor 11-20 and the RF processor 11-10. Further, the controller 11-40 writes or reads data to or from the storage 11-40. To this end, the controller 11-40 may include at least one processor. For example, the controller 11-40 may include a communication processor (CP) for controlling communication and an application processor (AP) for controlling higher layers such as application programs.

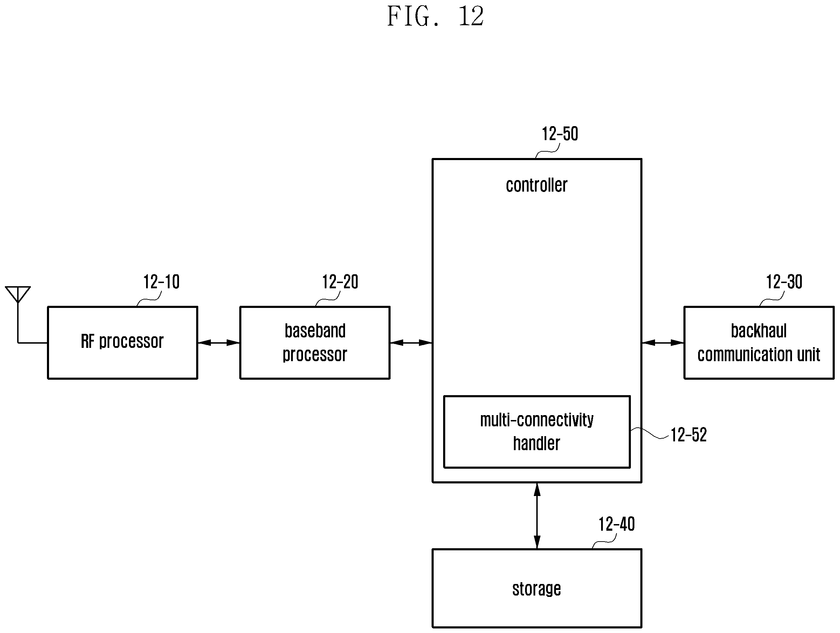

FIG. 12 illustrates a block configuration of a primary base station in a wireless communication system according to an embodiment of the disclosure.

As shown in the drawing, the base station may include an RF processor 12-10, a baseband processor 12-20, a backhaul communication unit 12-30, a storage 12-40, and a controller 12-50.

The RF processor 12-10 performs a function for transmitting and receiving a signal through a radio channel, such as signal band conversion and amplification. That is, the RF processor 12-10 performs up-conversion of a baseband signal provided from the baseband processor 12-20 into an RF-band signal and transmits the converted signal through an antenna, and performs down-conversion of an RF-band signal received through an antenna into a baseband signal. For example, the RF processor 12-10 may include a transmission filter, a reception filter, an amplifier, a mixer, an oscillator, a DAC, and an ADC. Although only one antenna is illustrated in the drawing, the first access node may be provided with a plurality of antennas. Additionally, the RF processor 12-10 may include a plurality of RF chains. Further, the RF processor 12-10 may perform beamforming. For beamforming, the RF processor 12-10 may adjust phases and amplitudes of individual signals transmitted and received through plural antennas or antenna elements. The RF processor may perform downlink MIMO operation by transmitting one or more layers.

The baseband processor 12-20 performs conversion between a baseband signal and a bit stream in accordance with the physical layer specification of a first radio access technology. For example, for data transmission, the baseband processor 12-20 generates complex symbols by encoding and modulating a transmission bit stream. Further, for data reception, the baseband processor 12-20 restores a reception bit stream by demodulating and decoding a baseband signal provided from the RF processor 12-10. For example, in the case of utilizing OFDM, for data transmission, the baseband processor 12-20 generates complex symbols by encoding and modulating a transmission bit stream, maps the complex symbols to subcarriers, and composes OFDM symbols through IFFT operation and CP insertion. Further, for data reception, the baseband processor 12-20 divides a baseband signal provided from the RF processor 12-10 in units of OFDM symbols, restores the signals mapped to subcarriers through FFT operation, and restores the reception bit stream through demodulation and decoding. The baseband processor 12-20 and the RF processor 12-10 transmits and receives signals as described above. Hence, the baseband processor 12-20 and the RF processor 12-10 may be called a transmitter, a receiver, a transceiver, a communication unit, or a wireless communication unit.

The backhaul communication unit 12-30 provides an interface for communication with other nodes in the network. That is, the backhaul communication unit 12-30 converts a bit stream, which is to be transmitted from the base station to another node, for example, a secondary base station or the core network, into a physical signal, and converts a physical signal received from another node into a bit stream.

The storage 12-40 stores data such as basic programs, application programs, and configuration information for the operation of the base station. In particular, the storage 12-40 may store information on a bearer allocated to a connected UE and measurement results reported from the connected UE. Further, the storage 12-40 may store information used as a criterion for determining whether to provide or suspend multi-connectivity to the UE. In addition, the storage 12-40 provides stored data in response to a request from the controller 12-50.

The controller 12-50 controls the overall operation of the primary base station. For example, the controller 12-50 transmits and receives signals through the baseband processor 12-20 and the RF processor 12-10 or through the backhaul communication unit 12-30. Further, the controller 12-50 writes or reads data to or from the storage 12-40. To this end, the controller 12-50 may include at least one processor.

The embodiments of the disclosure disclosed in this specification and drawings are merely specific examples presented to easily describe the technical contents of the disclosure and to help understand the disclosure, and are not intended to limit the scope of the disclosure. It will be apparent to those skilled in the art to which the disclosure belongs that other modifications based on the technical idea of the disclosure in addition to those embodiments disclosed herein can be carried out.

**Claims**

1. A method performed by a terminal in a wireless communication system, the method comprising:

   receiving a system information block (SIB) from a base station;
   identifying, based on a mobile integrated access and backhaul (IAB) indicator included in the SIB, whether the base station is a mobile IAB node; and
   performing cell reselection based on mobile IAB-specific cell reselection parameters included in the SIB in case that the base station associated with a serving cell of the terminal is a mobile IAB node.

2. The method of claim 1, further comprising:
   determining, in case that the base station associated with the serving cell of the terminal is a mobile IAB node, whether the terminal supports mobile IAB.

3. The method of claim 1, wherein the mobile IAB-specific cell reselection parameters indicate a frequency associated with a mobile IAB cell as having the highest priority.

4. The method of claim 1, wherein the mobile IAB-specific cell reselection parameters include a mobile IAB-specific reselection time value (T-reselection).

5. The method of claim 1, wherein the mobile IAB-specific cell reselection parameters include threshold values for received signal quality and received signal strength.

6. The method of claim 1, wherein the mobile IAB-specific cell reselection parameters include offset values to be applied to cell-ranking values.

7. The method of claim 1, wherein the mobile IAB-specific cell reselection parameters include cell reselection priority information for multiple mobile IAB cells.

8. The method of claim 1, further comprising:
   performing cell reselection based on the mobile IAB-specific cell reselection parameters in case that the base station associated with the serving cell of the terminal is not a mobile IAB node and a cell close to the terminal is a mobile IAB cell.

9. A terminal operating in a wireless communication system, comprising:

   a transceiver; and
   a controller,
   wherein the controller is configured to:

   receive a system information block (SIB) from a base station;
   identify, based on a mobile integrated access and backhaul (IAB) indicator included in the SIB, whether the base station is a mobile IAB node; and
   perform cell reselection based on mobile IAB-specific cell reselection parameters included in the SIB in case that the base station associated with a serving cell of the terminal is a mobile IAB node.

10. The terminal of claim 9, wherein in case that the base station associated with the serving cell of the terminal is a mobile IAB node, the controller is further configured to determine whether the terminal supports mobile IAB.

11. The terminal of claim 9, wherein the mobile IAB-specific cell reselection parameters indicate a frequency associated with a mobile IAB cell as having the highest priority.

12. The terminal of claim 9, wherein the mobile IAB-specific cell reselection parameters include a mobile IAB-specific reselection time value (T-reselection).

13. The terminal of claim 9, wherein the mobile IAB-specific cell reselection parameters include threshold values for received signal quality and received signal strength.

14. The terminal of claim 9, wherein the mobile IAB-specific cell reselection parameters include offset values to be applied to cell-ranking values, and cell reselection priority information for multiple mobile IAB cells.

15. The terminal of claim 9, wherein the controller is further configured to perform cell reselection based on the mobile IAB-specific cell reselection parameters in case that the base station associated with the serving cell of the terminal is not a mobile IAB node and a cell close to the terminal is a mobile IAB cell.

# FIG. 1

# FIG. 2

**2-10** cell with the strongest signal strength among cells having low priority

**2-05** serving cell

**2-15** cell with the strongest signal strength among cells having high priority

**2-40** Threshx-low

**2-20** SintraSearch

**2-25** SnonintraSearch

**2-30** Threshserving-low

**2-35** Threshx-high

inter-/inter-RAT measurements for frequency or RAT with high priority

intra-frequency measurements

inter-/inter-RAT measurements for frequency or RAT with equal or low priority

# FIG. 3

UE operation

receive cell reselection priority
information of frequencies through SIBs — 3-00

is priority information for
current frequency present? — 3-05

NO

regard the priority of current
frequency as the lowest — 3-10

YES

apply priority information obtained from SIBs — 3-15

cell reselection priority
information for UE-specific cell is
present in RRC message? — 3-20

NO

YES

start timer as indicated by RRC message — 3-25

determine whether UE's
current idle mode state is 'camped
on any cell state' or 'camped
normally state' — 3-30

Camped on
any cell state

Camped
normally

at least one of three
conditions is satisfied? — 3-35

YES

discard priority information
provided via RRC message — 3-40

NO

apply priority information
provided via RRC message — 3-45

three conditions:
- UE switches to
connected mode
- First timer has
expired
- PLMN selection
process is performed
in response to NAS
request

# FIG. 4

(a)

(b)

EP 4 546 869 A1

FIG. 5

UE operation

obtain system information including legacy cell reselection parameters and mobile IAB-specific cell reselection parameters — 5-05

No (normal base station) — determine whether UE is camping on mobile IAB cell based on new indicator included in SIB1 — 5-10 — Yes

5-15 — apply legacy cell reselection rule

5-20 — apply new mobile IAB-specific cell reselection rule

# FIG. 6

(a)

(b)

EP 4 546 869 A1

# FIG. 7

UE operation

obtain system information including legacy cell reselection parameters and mobile IAB-specific cell reselection parameters — 7-05

neighbor cell considered for cell reselection is mobile IAB cell? — 7-10

No (normal base station)

Yes

apply legacy cell reselection rule — 7-15

apply new mobile IAB-specific cell reselection rule — 7-20

# FIG. 8

```
Base station operation
```

broadcast system information including
legacy cell reselection parameters and mobile
IAB-specific cell reselection parameters — 8-05

## FIG. 9

base station 1 (9-05) — UE (9-10) — mobile IAB node (9-15)

UE capability report (9-20)

cell measurement configuration information (9-25)

measure neighbor cells according to configuration information (9-30)

SS/PBCH (9-35)

cell measurement result report (9-40)

determine to instruct the UE to collect information about unidentified cell, including NCGI, ECGI, TAC, RANAC, PLMN ID, NR frequency band information, by using newly obtained PCI (9-45)

cell measurement configuration information (9-50)

SIB1 (NCGI, ... , mobile IAB indicator) (9-55)

cell measurement result report (NCGI, ... , mobile IAB indicator) (9-60)

perform ANR (Automatic Neighbour Cell Relation) function, and update neighbor cell information (9-65)

SIB3, SIB4 update (updated list of mobile IAB cells) (9-70)

EP 4 546 869 A1

# FIG. 10

```
                    ┌──────────────────────────────┐
                    │         UE operation         │
                    └──────────────────────────────┘
                                   │
                                   ▼
        ┌──────────────────────────────────────────┐
        │        report UE capability information   │ ～ 10-05
        └──────────────────────────────────────────┘
                                   │
                                   ▼
        ┌──────────────────────────────────────────┐
        │  receive cell measurement configuration   │ ～ 10-10
        │              information                  │
        └──────────────────────────────────────────┘
                                   │
                                   ▼
        ┌──────────────────────────────────────────┐
        │ perform measurement on neighbor cells,    │ ～ 10-15
        │            and report results             │
        └──────────────────────────────────────────┘
                                   │
                                   ▼
        ┌──────────────────────────────────────────┐
        │     receive cell measurement configuration│ ～ 10-20
        │      information including ReportCGI       │
        └──────────────────────────────────────────┘
                                   │
                                   ▼
        ┌──────────────────────────────────────────┐
        │ receive SIB1 provided from the cell       │ ～ 10-25
        │           indicated by PCI                │
        └──────────────────────────────────────────┘
                                   │
                                   ▼
        ┌──────────────────────────────────────────┐
        │ report information contained in SIB1 to   │ ～ 10-30
        │ serving cell (possibly including an       │
        │ indicator to mobile IAB)                  │
        └──────────────────────────────────────────┘
```

FIG. 11

11-40

controller

11-20

baseband
processor

11-10

RF processor

multi-connectivity
handler

11-42

11-30

storage

# FIG. 12

controller 12-50

RF processor 12-10

baseband processor 12-20

backhaul communication unit 12-30

multi-connectivity handler 12-52

storage 12-40

EP 4 546 869 A1

<table>
<tr><td colspan="2" style="text-align:center">**INTERNATIONAL SEARCH REPORT**</td><td colspan="2">International application No.<br>**PCT/KR2023/010798**</td></tr>
</table>

**A. CLASSIFICATION OF SUBJECT MATTER**

**H04W 36/30**(2009.01)i; **H04W 36/00**(2009.01)i; **H04W 36/08**(2009.01)i; **H04W 84/04**(2009.01)i

According to International Patent Classification (IPC) or to both national classification and IPC

**B. FIELDS SEARCHED**

Minimum documentation searched (classification system followed by classification symbols)

H04W 36/30(2009.01); H04L 61/5007(2022.01); H04W 24/02(2009.01); H04W 36/00(2009.01); H04W 36/32(2009.01); H04W 48/12(2009.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 모바일(mobile) IAB(integrated access and backhaul), SIB(system information block), 셀(cell), 재선택(reselection)

**C. DOCUMENTS CONSIDERED TO BE RELEVANT**

| Category* | Citation of document, with indication, where appropriate, of the relevant passages | Relevant to claim No. |
|---|---|---|
| Y | WO 2021-034867 A1 (QUALCOMM INCORPORATED) 25 February 2021 (2021-02-25)<br>See paragraphs [0063]-[0064]; claims 2-4; and figure 6. | 1-15 |
| Y | US 2021-0051558 A1 (QUALCOMM INCORPORATED) 18 February 2021 (2021-02-18)<br>See paragraphs [0081], [0083] and [0086]-[0087]. | 1-15 |
| Y | WO 2021-230648 A1 (LG ELECTRONICS INC.) 18 November 2021 (2021-11-18)<br>See paragraphs [0119], [0123] and [0158]-[0159]; and claim 4. | 3-7,11-14 |
| A | KR 10-2022-0092554 A (HUAWEI TECHNOLOGIES CO., LTD.) 01 July 2022 (2022-07-01)<br>See paragraphs [0083]-[0369]; and figures 2-28. | 1-15 |
| A | ZTE et al. Support of Mobile IAB for 5G Advanced. RWS-210475, 3GPP TSG RAN Rel-18 workshop Electronic Meeting. 07 June 2021.<br>See pages 3-9. | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 October 2023** | **20 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010798**

| Patent document cited in search report | | | Publication date (day/month/year) | Patent family member(s) | | | Publication date (day/month/year) |
|---|---|---|---|---|---|---|---|
| WO | 2021-034867 | A1 | 25 February 2021 | CN | 114270915 | A | 01 April 2022 |
| | | | | EP | 4018711 | A1 | 29 June 2022 |
| | | | | US | 11350489 | B2 | 31 May 2022 |
| | | | | US | 2021-0059015 | A1 | 25 February 2021 |
| US | 2021-0051558 | A1 | 18 February 2021 | CN | 114208061 | A | 18 March 2022 |
| | | | | EP | 4014567 | A1 | 22 June 2022 |
| | | | | US | 11638194 | B2 | 25 April 2023 |
| | | | | WO | 2021-034514 | A1 | 25 February 2021 |
| WO | 2021-230648 | A1 | 18 November 2021 | KR | 10-2022-0158015 | A | 29 November 2022 |
| | | | | US | 2023-0180079 | A1 | 08 June 2023 |
| KR | 10-2022-0092554 | A | 01 July 2022 | BR | 112022008474 | A2 | 12 July 2022 |
| | | | | CN | 114600508 | A | 07 June 2022 |
| | | | | EP | 4047987 | A1 | 24 August 2022 |
| | | | | EP | 4047987 | A4 | 16 November 2022 |
| | | | | US | 2022-0263797 | A1 | 18 August 2022 |
| | | | | WO | 2021-088074 | A1 | 14 May 2021 |

Form PCT/ISA/210 (patent family annex) (July 2022)